# EUROPEAN PATENT APPLICATION

(11) **EP 1 659 164 A2**
(43) Date of publication of application: **24.05.2006**
(21) Application number: 05023228.9
(22) Date of filing: 25.10.2005
(51) Int. Cl.: C10M 147/04, C10M 169/00, C10M 169/04, C10M 169/06, C10M 177/00, C08G 65/00

(54) **(Per)Fluoropolyether additives for perfluoropolyether oils or greases**

(30) Priority: 19.11.2004 IT MI20042239
(71) Applicant: Solvay Solexis S.p.A., 20121 Milano (IT)
(72) Inventor: Russo, Antonio, 20100 Milano (IT); Tonelli, Claudio, 20099 Sesto S. Giovanni Milano (IT)
(74) Representative: Sama, Daniele

(57) **Abstract**

Compounds usable as stabilizing additives of perfluoropolyether fluids working at high temperatures, higher than 200°C, and/or in the presence of metals and/or in the presence of Lewis acids, are formed of (per)fluoropolyether chains and of end groups having a heteroaromatic structure, according to the following general formula:

T₁-CFW₁-O-R_{f}-CFW₂-T₂ (I)

wherein
- T₁, T₂, equal to or different from each other, have the following meanings:
   - F, CF₃, C₂F₅, (C₂F₄)Cl
   - -CH₂-B-Y, -CH(CF₃)O-Y, wherein:
      - B = O, S;
      - Y is a substituent formed of a ring having a heterocyclic structure having the following formula: 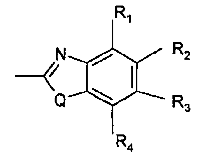 wherein:
         R₁, R₂, R₃, R₄, equal to or different from each other are H, linear or branched C₁-C₈ perfluoroalkyl, NO₂, CN, preferably H;
      with the proviso that at least one of the two end groups T₁, T₂ is -CH₂-B-Y or -CH(CF₃)O-Y, wherein B and Y are as above;
   - W₁, W₂, equal to or different from each other, are -F, -CF₃;
Rf is a (per)fluoropolyoxyalkylene chain having a number average molecular weight between 500 and 10,000, preferably between 800 and 5,000.

## Description

The present invention relates to stabilizing additives for lubricating oils and greases towards Lewis acids.

More specifically the invention relates to the use of fluorinated additives as stabilizing agents of fluorinated oils and greases, preferably having a perfluoropolyether structure, for their use in the presence of Lewis acids at high temperature, for example higher than 200°C up to 280°C. The present invention also refers to the process for preparing said additives and to compositions of oils and greases, preferably having a perfluoropolyether structure, comprising said additives.

It is known in the prior art that perfluoropolyethers have high chemical and thermal stability and are therefore used in many applications as lubricating oils and greases, or hydraulic fluids. However in some extremely severe operating conditions, perfluoropolyethers show the drawback to have an insufficient thermal stability and they tend therefore to decompose.

Particularly critical applications are also those wherein lubricants having a perfluoropolyether structure are in the presence of Lewis acids. It is indeed known that Lewis acids, in particular aluminum, iron, titanium, vanadium and other fluorides, catalyze perfluoropolyether degradation. The applications wherein lubricants are in contact with Lewis acids are for example lubrication of magnetic discs. In this case the Lewis acid is generated by reading head of the hard disk. This process of degradation leads to the breaking and fragmentation of the perfluoropolyether chains. In some cases it is also possible to arrive to the total decomposition of the perfluoropolyether fluid. Under these conditions volatile fractions are produced which evaporate under the lubricant use conditions, so that the lubricant can be completely lost. Furthermore, the fluid decomposition is generally associated to a progressive metal corrosion, when in contact with the fluid.

It is known in the prior art that the stability to Lewis acids of oils and greases having a perfluoropolyether structure, when used at high temperatures, can be impoved by using specific stabilizing additives. European patent application No. 04011149.4 (publication No. EP 1 479 753) describes stabilizing additives having a (per)fluoropolyether structure for lubricating oils and greases towards Lewis acids ended with pyridine groups, optionally substituted.

Other stabilizing additives towards Lewis acids are known in the prior art, see USP 6,083,600. The additives of this patent have a (per)fluoropolyether structure and are ended at both ends with substituted amine groups. In the Examples it is shown that said compounds are stable in the presence of Lewis acids at the temperature of 200°C for a time not higher than 4 hours (see the Example 7 and Fig. 3). The stability of these compounds at temperatures higher than 200°C, up to 280°C, is not reported.

The need was felt to have available compounds to be used as additives for fluorinated lubricating fluids, preferably having a perfluoropolyether structure, said compounds having the following combination of properties:
- capable to stabilize fluorinated oils and greases in the presence of Lewis acids at temperatures higher than 200°C, up to 280°C, even in the presence of metals;
- obtainable by simple method in high yields, higher than 80%, preferably higher than 90%, by using not very expensive and non toxic reactants and mild synthesis conditions.

The Applicant has surprisingly and unexpectedly found compounds to be used as additives to stabilize fluorinated oils and greases in the presence of Lewis acids, having the above combination of properties.

An object of the present invention are compounds usable as stabilizing additives of fluorinated, preferably perfluoropolyether, fluids, working at high temperatures, higher than 200°C, up to 280°C in the presence of Lewis acids, optionally even in the presence of metals, said compounds being formed of (per)fluoropolyether chains and end groups having a heteroaromatic structure, having the following general formula:

T₁-CFW₁-O-R_{f}-CFW₂-T₂ (I)

wherein
- T₁, T₂, equal to or different from each other, have the following meanings:
   - F, CF₃, C₂F₅, (C₂F₄)Cl;
   - -CH₂-B-Y, -CH(CF₃)O-Y, wherein:
      - B = O, S;
      - Y is a substituent formed of a ring having a heterocyclic structure having the following formula: 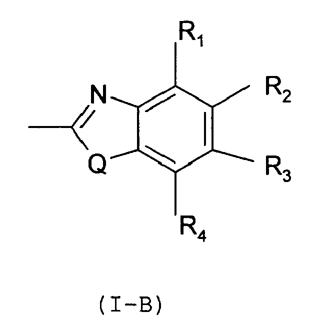
      wherein:
      Q is equal to O, S or to the -CH=N- group;
      R₁, R₂, R₃, R₄, equal to or different from each other are H, linear or branched C₁-C₈ perfluoroalkyl, NO₂, CN, preferably H;
      with the proviso that at least one of the two end groups T₁, T₂ is -CH₂-B-Y or -CH(CF₃)O-Y;
   - W₁ and W₂, equal to or different from each other, are F, -CF₃, preferably F;
   - Rf is a (per)fluoropolyoxyalkylene chain comprising one or more repeating units, statistically distributed along the polymeric backbone, having the following structure:
      (CFXO), (C₂F₄O), (CF₂CF₂CF₂O), (CF₂CF₂CF₂CF₂O), (C₃F₆O), (CR₅R₆CF₂CF₂O);
      wherein X is F, CF₃; R₅ and R₆, equal to or different from each other, are selected from H, Cl, or perfluoroalkyl from 1 to 4 carbon atoms,
      R_{f} having a number average molecular weight between 500 and 10,000, preferably between 800 and 8,000, still more preferably between 2,000 and 5,000.

Preferably in formula (I-B) of Y when Q is CH=N, N is linked to the aromatic ring and the compound belongs to the quinoxaline class.

The repeating unit (C₃F₆O) of the (per)fluoropolyoxyalkylene chain represents units of formula:

-(CF₂CF(CF₃)O)- or -(CF(CF₃)CF₂O)-.

The preferred perfluoropolyether chain Rf is selected from the following structures:
(A) -(CF₂CF(CF₃)O)ₐ(CFXO)_{b}-CF₂(R'_{f})CF₂-O-(CF₂CF(CF₃)O)ₐ(CFXO)_{b}-
   wherein R'_{f} is a fluoroalkylene group from 1 to 4 C atoms; X is as above; a and b are integers such that the number average molecular weight is in the above range; a/b is between 10 and 100 where b is different from 0;
(B) - (CF₂CF₂O)_{c}(CF₂O)_{d}(CF₂(CF₂)_{z}O)ₕ-
   wherein c, d and h are integers such that the number average molecular weight is within the above range; c/d is between 0.1 and 10 where d is different from 0; h/(c+d) is between 0 and 0.05 where (c+d) is different from 0, z is 2 or 3, h can also be equal to 0;
(C) -(C₃F₆O)ₑ(CF₂CF₂O)_{f}(CFXO)_{g}-
   wherein X is as above; e, f, g are integers such that the number average molecular weight is within the above range; e/(f+g) is between 0.1 and 10 where (f+g) is different form 0; f/g is between 2 and 10 where g is different from 0;
(D) -(CF₂(CF₂)_{z}O)ₛ-
   wherein s is an integer such as to give the molecular weight in the above range, z has the meaning as above;
(E) -(CR₅R₆CF₂CF₂O)_{p'}-R'_{f}-O-(CR₅R₆CF₂CF₂O)_{q'}-
   wherein R₅ and R₆ are equal to or different from each other and selected from H, Cl or perfluoroalkyl from 1 to 4 C atoms; R'_{f} has the above meaning, p' and q' are integers such that the molecular weight is in the above range;
(F) -(CF(CF₃)CF₂O)_{j"}-R'_{f}-O-(CF(CF₃)CF₂O)_{j"}-
   j" being an integer such as to give the above molecular weight, R'_{f} being as above.

Particularly preferred (per)fluoropolyoxyalkylene structures are (A) and (B), preferably (B).

The above described (per)fluoropolyoxyalkylene structures can be obtained by using the synthesis methods described in GB 1,104,482, USP 3,715,378, USP 3,242,218, USP 4,647,413, EP 148,482, USP 4,523,039, EP 340,740, WO 90/03357, USP 3,810,874, EP 239,123, USP 5,149,842, USP 5,258,110.

The compounds of the present invention are transparent and odourless viscous liquids.

A further object of the present invention are lubricating formulations comprising:
- a fluorinated oil or grease, preferably having a perfluoropolyether structure;
- from 0.05% to 10% by weight, preferably from 0.1% to 5% by weight, still more preferably from 0.5% to 2%, on the whole composition, of the compounds of formula (I) of the present invention.
The perfluoropolyethers usable as oils or as components for preparing greases are selected from the following classes:
(1) E-O-[CF(CF₃)CF₂O]_{m'}(CFXO)_{n'}-E'
   wherein:
   X is as above;
   E and E', equal to or different from each other, are selected from -CF₃, -C₂F₅ or -C₃F₇;
   m' and n' are integers such that the m'/n' ratio is between 20 and 1000 where n' is different from 0 and the viscosity of the product measured at 20°C is within the limits indicated below; the above indicated repeating units are statistically distributed along the chain.
   These compounds can be obtained by perfluoropropene photooxidation as described in GB 1,104,432, and by subsequent conversion of the end groups as described in GB 1,226,566.
(2) C₃F₇O-[CF(CF₃)CF₂O]_{o'}-D
   wherein:
   D is equal to -C₂F₅ or -C₃F₇;
   o' is an integer such that the viscosity of the product is within the range indicated below.
   These products can be prepared by ionic oligomerization of perfluoropropylenoxide and subsequent treatment with fluorine as described in USP 3,242,218.
(3) {C₃F₇O-[CF(CF₃)CF₂O]_{p'}-CF(CF₃)-}₂
   wherein:
   p' is an integer such that the viscosity of the product is within the range indicated below.
   These products can be obtained by ionic telomerization of perfluoropropylenoxide and subsequent photochemical dimerization as reported in USP 3,214,478.
(4) E-O-[CF(CF₃)CF₂O]_{q'}(C₂F₄O)_{r'}(CFX)_{s'}-E'
   wherein:
   X is as above;
   E and E', equal to or different from each other, are as above;
   q', r' and s' are integers, including 0, such that the viscosity of the product is within the range indicated below.
   These products are obtainable by photooxidation of a mixture of C₃F₆ and C₂F₄ and subsequent treatment with fluorine as described in USP 3,665,041.
(5) E-O-(C₂F₄O)_{t'}(CF₂O)_{u'}-E'
   wherein:
   E and E', equal to or different from each other, are as above;
   t' and u' are integers such that the t'/u' ratio is between 0.1 and 5 where u' is different from 0, and the viscosity of the product is within the limits indicated below.
   These products are obtained by photooxidation of C₂F₄ as reported in USP 3,715,378 and subsequent treatment with fluorine as described in USP 3,665,041.
(6) E-O-(CF₂CF₂CF₂O)ᵥ'-E'
   wherein:
   E and E', equal to or different from each other are as above;
   v' is a number such that the viscosity is within the range indicated below.
   These products are obtained as reported in EP 148,482.
(7) D-O-(CF₂CF₂O)_{z'}-D'
   wherein:
   D and D', equal to or different from each other, are as above;
   z' is an integer such that the viscosity of the product is within the range indicated below.
   These products can be obtained as described in USP 4,523,039.

The perfluoropolyethers of the above classes from (1) to (7) are liquids having a very low vapour pressure and having a kinematic viscosity measured at 20°C generally from 10 to 10,000 cSt, preferably from 300 to 2,000 cSt.

The preferred perfluoropolyether oils are those of the classes (1), (4), (5) and are available on the market with the trademark FOMBLIN® marketed by Solvay Solexis.

The formulations of the invention can contain other additives commonly used in fluorinated lubricant formulations, preferably having a perfluoropolyether structure. For example anti-wear, anti-rust additives and Lewis anti-acid additives can be mentioned. Anti-wear additives are for example those having a perfluoropolyether structure linked to phosphazene rings. For example those described in EP 1,336,614 in the name of the Applicant can be used.

Furthermore, in case of lubricating greases, the formulations contain as essential components, besides one or more perfluoropolyether oils belonging to one or more of the above classes and to the additive of formula (I), also thickening additives as for example PTFE, optionally sodium terephthalate, calcium or lithium soaps, polyurea. As thickening agent, PTFE (polytetrafluoroethylene) is preferably used.

Other components, generally contained in the greases, are the following: dispersing agents as for example surfactants, in particular nonionic surfactants and preferably with a perfluoropolyether or perfluoroalkyl structure; besides talc or inorganic fillers. The lubricating greases having a perfluoropolyether structure can also contain other additives commonly used in grease formulations.

A further object of the present invention is a process for obtaining the compounds of formula (I), comprising the following steps:
a) formation of an alcoholate or thiolate, by reacting a compound having a (per)fluoropolyoxyalkylene structure of formula:

   T'₁-CFW₁-O-R_{f}-CFW₂-T'₂ (II)

   wherein:
   R_{f}, W₁ and W₂ have the above meanings;
   T'₁ and T'₂, equal to or different from each other, represent an end group selected from the following: CH₂OH, CH₂SH, CH(OH)CF₃, F, CF₃, C₂F₅, (C₂F₄)Cl; with the proviso that at least one of the two end groups T'₁ and/or T'₂ is equal to CH₂OH, CH₂SH, CH(OH)CF₃, CH(SH)CF₃;
   with an organic or inorganic base, in an organic solvent inert under the reaction conditions, at temperatures between 20°C and 100°C, preferably between 20°C and 30°C;
b) reaction of the alcoholate or thiolate obtained in step
   a) with a compound of formula 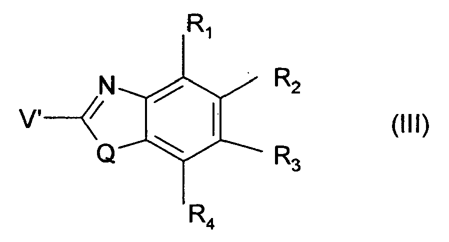 wherein Q, R₁, R₂, R₃, R₄ have the above meaning, V' is a halogen atom selected from Cl, Br, I;
   carried out in an organic solvent inert under the reaction conditions, preferably the same used in step a), at temperatures between 20°C and 100°C, preferably between 40°C and 80°C;
c) isolation of the product from the reaction mass.

In step a) the compounds of formula II) can be obtained as described in USP 3,810,874.

The organic solvent used in the process of the present invention is preferably selected from hydrogenated solvents, as for example terbutyl alcohol, acetonitrile, diglyme, DMF, toluene, xylene, or fluorinated or hydrofluorinated solvents, having a boiling point in the range 20°C-150°C, preferably 40°C-100°C.

In step a) the ratio by weight solvent/(per)fluorinated alchol or thiol, preferably ranges from 0.5 to 10, more preferably from 2 to 5.

The base used in step a) can be an organic or inorganic base, for example it can be selected from potassium terbutylate, KOH, NaH.

In step a) the ratio in equivalents between the base and compound (II) ranges from 1.1 to 2, preferably from 1.2 to 1.5.

In step a) the reaction is very rapid.

The reaction times in step b) depend on the reaction temperature and are generally between 4 hours and 24 hours. For example when the reaction temperature is 80°C, the reaction time is about 6 hours.

In step b) the ratio [equivalents of the alcoholate or thiolate function of the (per)fluoropolyether]/moles of the compound (III) ranges from 1 to 0.5, preferably from 0.8 to 0.6.

In step c) the product is isolated by using the known methods of the prior art.

The yields obtained with the process of the present invention are high, anyway higher than 80%, preferably higher than 90%.

As said, the compounds of formula (I) can be used as additives for fluorinated oils and greases and preferably for lubricating fluids having a perfluoropolyether structure.

Tests carried out by the Applicant have shown that the compounds of the invention can also be used as anti-wear additives for perfluoropolyether oils.

Furthermore tests carried out by the Applicant have shown that the compounds of the present invention can also be used as additives capable to confer thermooxidative stability to fluorinated oils when the temperatures are particularly high, for example higher than 200°C, up to 330°C.

Some Examples are reported hereinafter for illustrative and not limitative purposes of the present invention.

### EXAMPLES

### Methods

The tests used for evaluating the effectiveness of the additives described in the present invention are briefly reported hereinafter.

### Stability test to Lewis acids for oils

The determination of the stability of the oils to be tested to Lewis acids in the presence of the additives of the present invention was carried out as follows.

5 grams of the fluid to be tested, containing the additive excluding the comparative Examples carried out with the non additived fluid, and 0.1 g of AlF₃ are fed into a glass test tube (about 10 cc). The test tube is weighed and closed with a screw plug having a hole in the middle on which a 30 cm PTFE little pipe is fixed which conveys possible decomposition products in a NaOH solution (0,1 N), contained in a collecting cylinder. The test tube is then brought to the temperature from 200°C to 280°C for 24 hours. At the end the test tube is cooled and weighed. The weight difference before and after heating, referred to the sample weight before the test, gives the loss determined in per cent by weight of the tested fluid.

### Stability test to Lewis acids for greases

A 50 g grease sample to be tested, containing the additive except the comparative Examples carried out with the non additived fluid, is additioned with 5% by weight of AlF₃ and deposited, by means of a stratifying knife, in a glass capsule (plate) having a 95 mm diameter, so as to cover the whole exposed surface. The capsule is put in a drier for 30 minutes, then weighed and put in a stove at a temperature from 200°C to 280°C. After 4 hours the capsule is taken from the stove and cooled in a drier. The capsule is then weighed again and the per cent weight loss with respect to the starting weight is evaluated. The test result is therefore expressed in per cent weight loss with respect to the starting weight.

### Anti-wear test

The ASTM D 4172 method has been used as application test allowing to determine the wear as described hereinafter.

Three AISI N. E-52100 steel spheres, having a 12.7 mm diameter, 25 EP degree (Extra Polish), previously cleaned by washing by dipping in n-hexane (15 minutes) and then in Galden® HT55 (15 minutes) followed by drying, are placed in a container equipped with a suitable hollow so as to have three points in contact and, then, are covered with the lubricant to be tested. A fourth sphere of the same kind, connected to an electric motor which allows its rotation, is placed over the three mentioned spheres with a load of 40±0.2 kgf (392 N). The whole is assembled, closed and heated to 75°±2°C. When said temperature has been reached, the fourth sphere, placed on the three of reference, is rotated at the rate of 1200±60 rpm for 60±1 minutes. At the end of the test the container is disassembled, the lubricant is removed and the wear of the three spheres contained therein is evaluated by an optical microscope having a 0.01 mm precision.

The wear value, expressed in mm, is obtained as an arithmetic average of six determinations, by measuring for each sphere, without removing it from the hollow, the wear diameter in the rotation direction and the diameter perpendicular thereto.

### Determination of the molecular weight

The number average molecular weight is determined by ¹⁹F NMR analysis according to S. Turri et al. Macromolecules, 1995, 28, 7271-7275 and S. Turri et al. Macromol. Chem. Phys. 198 3215-3228 (1997).

### EXAMPLE 1

### Preparation of the derivative of formula (1) having number average MW 4,116

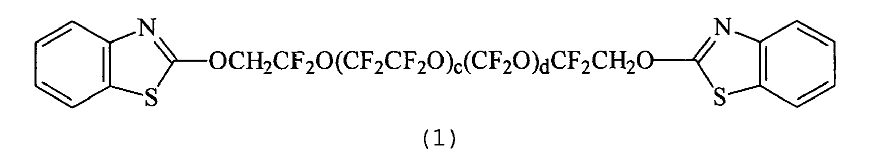

30 g of terbutyl alcohol and 2.3 g (0.02 moles) of potassium terbutylate are introduced into a 250 ml glass reactor equipped with mechanical stirrer, thermometer and condenser. Then 30 g (0.0156 eq) of HOCH₂CF₂O(CF₂CF₂O)_{c}(CF₂O)_{d}CF₂CH₂OH (equivalent weight EW = 1923) wherein c/d = 0.97, are fed under stirring at room temperature. The reaction mixture is left under stirring for about 30 minutes, then 3.2 g (0.02 moles) of 2-chlorobenzo thiazole are fed into the reactor. The so obtained mixture is heated to 80°C and kept under stirring for about 6 hours. After cooling 100 g of demineralized water are added and then the mixture is neutralized with a HCl aqueous solution at 5% by weight. Then the phases are let separate, the heavy organic phase is separated and washed twice with 100 g of demineralized water. The organic phase is anhydrified at 120°C at a residual pressure of 10⁻² mbar for about 4 hours, and then filtered on 0.2 µm PTFE filter. 25.7 g of product are thus obtained having a conversion of alcoholic groups into ether groups equal to 98%. The IR and NMR (¹H, ¹⁹F and ¹³C) analyses confirm the structure of the above product.

The thermogravimetric analysis has given the following results:
nitrogen: 1%, 230°C; 2%, 246°C; 10%, 331°C; 50%, 423°C.
air : 1%, 228°C; 2%, 245°C; 10%, 328°C; 50%, 417°C.
The kinematic viscosity at 20°C is 159 cSt.
The density at 20°C is 1.7946.

### EXAMPLE 2

### Preparation of the derivative of formula (2) having number average MW 2,210

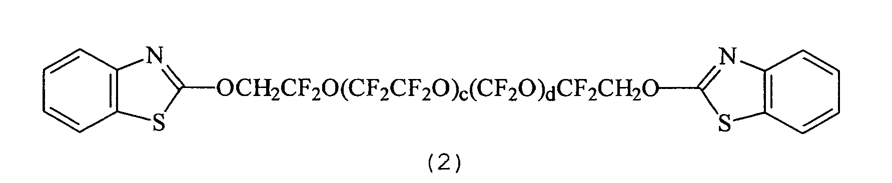

40 g of terbutyl alcohol and 3 g (0.027 moles) of potassium terbutylate are introduced into a 250 ml glass reactor equipped with mechanical stirrer, thermometer and condenser.

Then 20 g (0.02 eq) of HOCH₂CF₂O(CF₂CF₂O)_{c}(CF₂O)_{d}CF₂CH₂OH (EW = 970) wherein c/d = 1.0, are fed under stirring at room temperature. The reaction mixture is left under stirring for about 30 minutes, then 4 g (0.023 moles) of 2-chlorobenzothiazole are fed into the reactor. The so obtained mixture is heated to 80°C and kept under stirring for about 6 hours. After cooling 100 g of demineralized water are added and then the mixture is neutralized with a HCl aqueous solution at 5% by weight. Then the phases are let separate and the heavy organic phase is separated and washed twice with 100 g of demineralized water. The organic phase is anhydrified at 120°C at a residual pressure of 10⁻² mbar for about 4 hours, and then filtered on 0.2 µm PTFE filter. 17.9 g of product are thus obtained having a conversion of alcoholic groups into ether groups equal to 96%. The IR and NMR (¹H, ¹⁹F and ¹³C) analyses confirm the structure of the above product.

The thermogravimetric analysis has given the following results:
nitrogen: 1%, 205°C; 2%, 230°C; 10%, 284°C; 50%, 363°C.
air : 1%, 206°C; 2%, 232°C; 10%, 285°C; 50%, 365°C.
The kinematic viscosity at 20°C is 95 cSt.
The density at 20°C is 1.7429.

### EXAMPLE 3

### Preparation of the derivative of formula (3) having number average MW 4,106

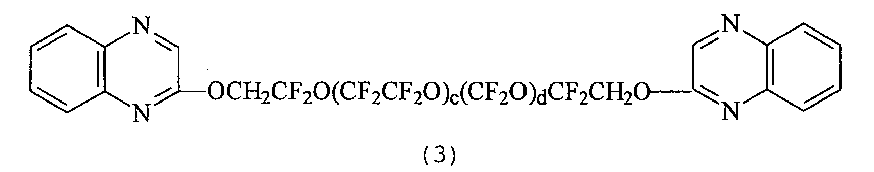

20 g of terbutyl alcohol and 1.3 g (0.012 moles) of potassium terbutylate are introduced into a 250 ml glass reactor equipped with mechanical stirrer, thermometer and condenser.

Then 20 g (0.01 eq) of HOCH₂CF₂O(CF₂CF₂O)_{c}(CF₂O)_{d}CF₂CH₂OH (EW = 1923) wherein c/d = 0.97, are fed under stirring at room temperature. The reaction mixture is left under stirring for about 30 minutes, then 2 g (0.012 moles) of 2-chloro quinoxaline are fed into the reactor. The so obtained mixture is heated to 80°C and kept under stirring for about 6 hours. After cooling 100 g of demineralized water are added and then the mixture is neutralized with a HCl aqueous solution at 5% by weight. Then the phases are let separate and the heavy organic phase is separated and washed twice with 100 g of demineralized water. After separation the organic phase is anhydrified at 120°C at a residual pressure of 10⁻² mbar for about 4 hours, and then filtered on 0.2 µm PTFE filter. 17.6 g of product are thus obtained having a conversion of alcoholic groups into ether groups equal to 99%. The IR and NMR (¹H, ¹⁹F and ¹³C) analyses confirm the structure of the above product.

A thermooxidation test is carried out by using 50 g of Fomblin® Z25, having number average molecular weight 10,000, additived with 0.5 g of the above synthesized product of formula (3).

The termooxidation test was carried out by using the equipment described by Carl E. Snyder, Jr. and Ronald E. Dolle, Jr., in ASLE Transactions, 13(3), 171-180 (1975). The operating conditions used were the following:
- Test temperature: 270°C;
- Air flow: 1 1/h;
- Metals dipped in the fluid: stainless steel (AISI 304) and Ti alloy (Al 6%, V 4%).

A sample of the fluid to be tested, containing the additive is introduced in the glass test tube of the equipment (see for example Fig. 1 of the reference). It is weighed and heated at the above indicated temperature. The required time elapsed (24 h), the glass test tube is cooled to room temperature and weighed again. The difference of weight before and after heating, referred to the weight of the sample before the test, gives the per cent weight loss of the tested fluid. At the end of the test also the state of the metals dipped into the fluid is visually evaluated.

After 24 hours a weight loss of the fluid equal to 0.22% is determined. The metals dipped into the fluid during the test (satinless steel and Ti, Al, V alloy) did not show oxidation/attack signs; at the end of the test their aspect was comparable with that of the specimens of the same metals not subjected to the treatment.

The previous test was repeated by increasing the exposure time of the mixture to 192 hours. At the end of the test the fluid showed a loss of 1.3% by weight. The metals dipped into the fluid during the test (stainless steel and Ti, Al, V alloy) did not show oxidation/attack signs, and at the visual inspection they were comparable with those not subjected to the treatment.

The thermooxidation test is repeated in the absence of the additive. After 24 hours under the indicated operating conditions the fluid was completely decomposed (weight loss = 100%). The metals, dipped into the fluid during the test, show at the end signs of marked corrosion.

### EXAMPLE 4

### Preparation of the derivative of formula (4) having number average MW 2,200

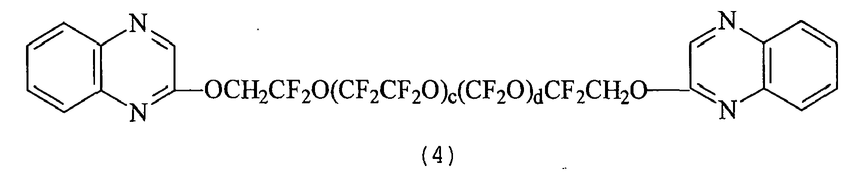

30 g of terbutyl alcohol and 2.7 g (0.024 moles) of potassium terbutylate are introduced into a 250 ml glass reactor equipped with mechanical stirrer, thermometer and condenser.

Then 20 g (0.02 eq) of HOCH₂CF₂O(CF₂CF₂O)_{c}(CF₂O)_{d}CF₂CH₂OH (EW = 970) wherein c/d = 1.0, are fed under stirring at room temperature. The reaction mixture is left under stirring for about 30 minutes, then 4 g (0.024 moles) of 2-chloro quinoxaline are fed into the reactor. The so obtained mixture is heated to 80°C and kept under stirring for about 6 hours. After cooling 100 g of demineralized water are added and then the mixture is neutralized with a HC1 aqueous solution at 5% by weight. Then the phases are let separate and the heavy organic phase is separated and washed twice with 100 g of demineralized water. After separation the organic phase is anhydrified at 120°C at a residual pressure of 10⁻² mbar for about 4 hours, and then filtered on 0.2 µm PTFE filter. 18.3 g of product are thus obtained having a conversion of alcoholic groups into ether groups equal to 97%. The IR and NMR (¹H, ¹⁹F and ¹³C) analyses confirm the structure of the above product.

### EXAMPLE 5

The stability test to Lewis acids for oils is carried out by using 5 g of Fomblin® Z25 oil, having number average molecular weight 10,000, additived with 0.05 g of the product of formula (1) of the Example 1. After 24 hours at 250°C a weight loss of the fluid equal to 0.17% is determined.

### EXAMPLE 6

The stability test to Lewis acids for oils is carried out by using 5 g of Fomblin® Z25 oil, having number average molecular weight 10,000, additived with 0.05 g of the product of formula (2) of the Example 2. After 24 hours at 250°C a weight loss of the fluid equal to 0.18% is determined.

### EXAMPLE 7 (comparative)

The Example 5 is repeated, but in the absence of the additive of the invention.

The fluid results completely decomposed after 5 hours from the beginning of the test.

### EXAMPLE 8

The stability test to Lewis acids for oils is carried out by using 5 g of Fomblin® Z25 oil, having number average molecular weight 10,000, additived with 0.05 g of the product of formula (3) of the Example 3. After 24 hours at 250°C a weight loss of the fluid equal to 0.18% is determined.

### EXAMPLE 9

A grease is prepared by mixing 70% by weight of Fomblin® M30 having molecular weight 9,800, with 30% by weight of PTFE. The grease is additived with 1% by weight of the additive prepared according to the Example 1 and then subjected to the stability test to Lewis acids for greases. At the end of the test, carried out at 250°C for 4 h, a weight loss of 0.21% is determined.

### EXAMPLE 10 (comparative)

The stability test to Lewis acids for oils is carried out by using 5 g of Fomblin® Z25 oil, having number average molecular weight 10,000, additived with 0.05 g of the product (I) of the Example 1 described in EP 1,354,932. This additive contains arylsubstituted end groups.

After 24 hours at 250°C a weight loss of the fluid equal to 0.42% is determined. Said weight loss is about 2.5 times higher than that observed by using the additives of the present invention.

### EXAMPLE 11 (comparative)

The stability test to Lewis acids for oils is carried out by using 5 g of Fomblin® Z25 oil, having number average molecular weight 10,000, additived with 0.05 g of the product of the Example 1 described in EP 1,336,614. This additive contains phosphazene groups.

After 24 hours at 250°C a weight loss of the fluid equal to about 5.0% is determined. Said weight loss is more than one order of magnitude higher than that observed by using the additives of the present invention.

### EXAMPLE 12 (comparative)

A sample of Fomblin® M30 oil was subjected to the previously described anti-wear test ASTM D 4172. The wear value obtained as an average of 6 determinations is of 1.40 mm.

### EXAMPLE 13

A mixture formed in % by weight of 99% of Fomblin® M30 oil and 1% of additive having structure (1) of the Example 1 of the present invention was subjected to the previously described ASTM D 4172 test. The wear value obtained as an average of 6 determinations is of 1.05 mm equal to a 25% reduction with respect to the value obtained without additive (Example 12 comparative).

## Claims

1. Compounds usable as stabilizing additives of fluorinated, preferably perfluoropolyether, fluids, working at high temperatures, higher than 200°C, up to 280°C in the presence of Lewis acids, said compounds being formed of (per)fluoropolyether chains and of end groups having a heteroaromatic structure, according to the following general formula:
T₁-CFW₁-O-R_{f}-CFW₂-T₂ (I)
wherein
- T₁, T₂, equal to or different from each other, have the following meanings:
- F, CF₃, C₂F₅, (C₂F₄)Cl;
- -CH₂-B-Y, -CH(CF₃)O-Y, wherein:
- B = O, S;
- Y is a substituent formed of a ring having a heterocyclic structure having the following formula: 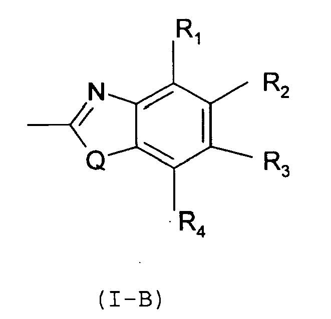 wherein:
Q is equal to O, S or to the -CH=N- group;
R₁, R₂, R₃, R₄, equal to or different from each other are H, linear or branched C₁-C₈ perfluoroalkyl, NO₂, CN, preferably H;
with the proviso that at least one of the two end groups T₁, T₂ is -CH₂-B-Y or -CH(CF₃)O-Y, wherein B and Y are as above;
- W₁ and W₂, equal to or different from each other, are -F, -CF₃, preferably F;
- Rf is a (per)fluoropolyoxyalkylene chain comprising one or more repeating units, statistically distributed along the polymeric backbone, having the following structure:
(CFXO), (C₂F₄O), (CF₂CF₂CF₂O), (CF₂CF₂CF₂CF₂O), (C₃F₆O), (CR₅R₆CF₂CF₂O);
wherein X is F, CF₃; R₅ and R₆, equal to or different from each other, are selected from H, Cl, or perfluoroalkyl from 1 to 4 carbon atoms,
R_{f} having a number average molecular weight from 500 to 10,000, preferably from 800 to 8,000, still more preferably from 2,000 to 5,000;

2. Compounds according to claim 1, wherein in the formula of the substituent Y when Q is CH=N, N is linked to the aromatic ring and the compound belongs to the quinoxaline class.

3. Compounds according to claims 1-2, wherein the fluorinated, preferably perfluoropolyether, fluids, work at high temperatures, higher than 200°C, up to 280°C, in the presence of Lewis acids and in the presence of metals.

4. Compounds according to claims 1-3, wherein the perfluoropolyether chain R_{f} is selected from the following structures:
(A) - (CF₂CF(CF₃)O)ₐ(CFXO)_{b}-CF₂(R' f) CF₂-O-(CF₂CF(CF₃)O)ₐ(CFXO)_{b}-
wherein R'_{f} is a fluoroalkylene group from 1 to 4 C atoms; X is as above; a and b are integers such that the number average molecular weight is within the above range; a/b is between 10 and 100 where b is different from 0;
(B) - (CF₂CF₂O) _{c}(CF₂O)_{d}(CF₂(CF₂)_{z}O)ₕ-
wherein c, d and h are integers such that the number average molecular weight is within the above range; c/d is between 0.1 and 10 where d is different from 0; h/(c+d) is between 0 and 0.05 where (c+d) is different from 0; z is 2 or 3; h can also be equal to 0;
(C) -(C₃F₆O)ₑ(CF₂CF₂O)_{f}(CFXO)_{g}-
wherein X is as above; e, f, g are integers such that the number average molecular weight is within the above range; e/(f+g) is between 0.1 and 10 where (f+g) is different from 0; f/g is between 2 and 10, where g is different from 0;
(D) -(CF₂(CF₂)_{z}O)ₛ-
wherein s is an integer such as to give the molecular weight in the above range, z has the meaning as above;
(E) -(CR₅R₆CF₂CF₂O)_{p'}-R'_{f}-O-(CR₅R₆CF₂CF₂O)_{q'}-
wherein R₅ and R₆ are equal to or different from each other and selected from H, Cl or perfluoroalkyl from 1 to 4 C atoms; R'_{f} is as above; p' and q' are integers such that the molecular weight is in the above range;
(F) -(CF(CF₃)CF₂O)_{j"}-R'_{f}-O-(CF(CF₃)CF₂O)_{j"}-
j" being an integer such as to give the molecular weight indicated above, R'_{f} being as above.

5. Compounds according to claim 4, wherein R_{f} is selected between (A) and (B), preferably (B).

6. Lubricating compositions comprising:
- a fluorinated oil or grease, preferably having a perfluoropolyether structure;
- from 0.05% to 10% by weight, preferably from 0.1% to 5% by weight, still more preferably from 0.5% to 2% by weight on the whole composition, of the compounds of formula (I).

7. Compositions according to claim 6, wherein the perfluoropolyethers usable as oils or as components for preparing greases are selected from the following classes:
(1) E-O-[CF(CF₃)CF₂O]_{m'}(CFXO)_{n'}-E'
wherein:
X is as above;
E and E', equal to or different from each other, are selected from -CF₃, -C₂F₅ or -C₃F₇;
m' and n' are integers such that the m'/n' ratio is between 20 and 1,000 where n' is different from 0 and the viscosity of the product measured at 20°C is within the limits indicated below; the above indicated repeating units are statistically distributed along the chain.
(2) C₃F₇O-[CF(CF₃)CF₂O]_{o'}-D
wherein:
D is equal to -C₂F₅ or -C₃F₇;
o' is an integer such that the viscosity of the product is within the range indicated below.
(3) {C₃F₇O-[CF(CF₃)CF₂O]_{p'}-CF(CF₃)-}₂
wherein:
p' is an integer such that the viscosity of the product is within the range indicated below.
(4) E-O-[CF(CF₃)CF₂O]_{q'}(C₂F₄O)_{r'}(CFX)_{s'}-E'
wherein:
X is as above;
E and E', equal to or different from each other, are as above;
q', r' and s' are integers, including 0, such that the viscosity of the product is within the range indicated below;
(5) E-O-(C₂F₄O)_{t'}(CF₂O)_{u'}-E'
wherein:
E and E', equal to or different from each other, are as above;
t' and u' are integers such that the t'/u' ratio is between 0.1 and 5 where u' is different from 0 and
the viscosity of the product is within the limits indicated below.
(6) E-O- (CF₂CF₂CF₂O)_{v'}-E'
wherein:
E and E', equal to or different from each other are as above;
v' is a number such that the viscosity is within the range indicated below.
(7) D-O- (CF₂CF₂O)_{z'}-D'
wherein:
D and D', equal to or different from each other, are as above;
z' is an integer such that the viscosity of the product is within the range indicated below;
the viscosity measured at 20°C of said perfluoropolyether oils being between 10 and 10,000 cSt, preferably between 300 and 2,000 cSt.

8. Compositions according to claim 7, wherein perfluoropolyether oils selected from the classes (1), (4) and (5) are used.

9. Compositions according to claims 6-8, comprising anti-wear additives.

10. Compositions according to claims 6-9, wherein the grease contains one or more perfluoropolyether oils and thickening additives selected from PTFE, optionally sodium terephthalate, calcium or lithium soaps, polyurea.

11. Compositions according to claim 10, comprising as dispersing additives, surfactants, preferably non ionic, and having a perfluoropolyether or perfluoroalkyl structure; talc or inorganic fillers.

12. A process for obtaining the compounds of formula (I) of claims 1-5, said process comprising the following steps:
a) formation of an alcoholate or thiolate, by reaction of a compound having a (per)fluoropolyoxyalkylene structure of formula:
T'₁-CFW₁-O-R_{f}-CFW₂-T'₂ (II)
wherein:
R_{f}, W₁ and W₂ have the above meanings;
T'₁ and T'₂, equal to or different from each other, represent an end group selected from the following: CH₂OH, CH₂SH, CH(OH)CF₃, F, CF₃, C₂F₅, (C₂F₄)Cl;
with the proviso that at least one of the two end groups T'₁ and/or T'₂ is equal to CH₂OH, CH₂SH, CH(OH)CF₃, CH(SH)CF₃;
with an organic or inorganic base, in an organic solvent inert under the reaction conditions, at a temperature between 20°C and 100°C, preferably between 20°C and 30°C;
b) reaction of the alcoholate or thiolate obtained in step a) with a compound of formula 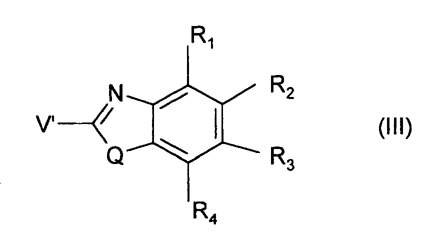 wherein Q, R₁, R₂, R₃, R₄ have the above meaning, V' is a halogen atom selected from Cl, Br, I;
step b) being carried out in an organic solvent inert under the reaction conditions, preferably the same used in step a), at temperatures between 20°C and 100°C, preferably between 40°C and 80°C;
c) isolation of the product from the reaction mass.

13. A process according to claim 12, wherein the organic solvent used is selected from hydrogenated solvents, preferably terbutyl alcohol, acetonitrile, diglyme, DMF, toluene, xylene; fluorinated or hydrofluorinated solvents, having a boiling point between 20°C and 150°C, preferably between 40°C and 100°C.

14. A process according to claims 12-13, wherein in step a) the ratio by weight solvent/(per)fluorinated alcohol or thiol ranges from 0.5 to 10, preferably from 2 to 5.

15. A process according to claims 12-14, wherein the base used in step a) is an organic or inorganic base, preferably potassium terbutylate, KOH and NaH.

16. A process according to claims 12-15, wherein in step a) the ratio in equivalents between the base and compound (II) ranges from 1.1 to 2, preferably from 1.2 to 1.5.

17. A process according to claims 12-16, wherein in step b) the ratio [equivalents of the alcoholate or thiolate function of the (per)fluoropolyether]/moles of the compound (III) ranges from 1 to 0.5, preferably from 0.8 to 0.6.

18. Use of the compounds of claims 1-5 as stabilizing additives of compositions of fluorinated lubricating oils and greases, preferably having a perfluoropolyether structure.

19. Use according to claim 18, wherein the compositions of lubricating oils and greases are used at high temperatures in the presence of Lewis acids.

20. Use according to claim 19, wherein the compositions of lubricating oils and greases take place in the presence of metals.

21. Use according to claims 19-20, wherein the utilization temperatures are equal to or higher than 200°C, up to 280°C.
